# EUROPEAN PATENT SPECIFICATION

(11) **EP 0 285 256 B1**
(45) Date of publication and mention of the grant of the patent: **07.02.1996**
(21) Application number: 88301705.5
(22) Date of filing: 26.02.1988
(51) Int. Cl.: C08L 67/02, C08L 37/00, C08K 5/00, C08K 5/17, C08L 33/14, C08L 33/24, C08L 35/00, C08K 5/35

(54) **Method for producing a thermoplastic resin composition**
Verfahren zur Herstellung einer thermoplastischen Harzzusammensetzung
Procédé de fabrication d'une composition de résine thermoplastique

(30) Priority: 31.03.1987 JP 80786/87
(43) Date of publication of application: 05.10.1988
(73) Proprietor: SUMITOMO CHEMICAL COMPANY, LIMITED, Chuo-ku Osaka 541 (JP)
(72) Inventor: Ohmae, Tadayuki, Chiba-shi Chiba 281 (JP); Toyoshima, Yoshiki, Ichihara-shi Chiba 299-01 (JP); Mashita, Kentaro, Ichihara-shi Chiba 299-01 (JP); Nambu, Jinsho, Ichihara-shi Chiba 299-01 (JP)
(74) Representative: Cresswell, Thomas Anthony

(56) References cited:
- EP-A- 0 177 151
- EP-A- 0 197 260
- WO-A-85/03718
- DE-A- 1 814 073
- PATENT ABSTRACTS OF JAPAN vol. 11, no. 30 (C-400)(2477), 29th January 1987; & JP-A-61 200 159 (UNITIKA LTD) 04.09.1986
- PATENT ABSTRACTS OF JAPAN vol. 11, no. 60 (C-405)(2507), 24th February 1987; & JP-A-61 221 260 (MITSUI PETROCHEM IND. LTD) 01.10.1986
- PATENT ABSTRACTS OF JAPAN vol. 5, no. 8 (C-39)(680), 20th January 1981; & JP-A-55 137 154 (TORAY K.K.) 25.10.1980
- PATENT ABSTRACTS OF JAPAN vol. 6, no. 235 (C-136)(1113), 20th November 1982; & JP-A-57 137 348 (TEIJIN K.K.) 24.08.1982
- PATENT ABSTRACTS OF JAPAN vol. 10, no. 199 (C-359)(2255), 11TH July 1986; & JP-A-61 42561 (TORA IND. INC.) 01.03.1986
- PATENT ABSTRACTS OF JAPAN vol. 8, no. 85 (C-219)(1522), 18th April 1984; & JP-A-59 4618 (TORAY K.K.) 11.01.1984

## Description

The present invention relates to a method for producing a novel thermoplastic resin composition which has improved mechanical properties, especially improved impact resistance and which can be utilized for making shaped articles, sheets or films by injection molding or extrusion molding.

Generally, saturated polyester resins are superior in weather resistance, electrical characteristics, chemical resistance, wear resistance and thermal aging resistance, and are widely used as engineering plastics. However, they have difficulties in impact resistance which hinder their development for practical use.

Hitherto, there have been proposed various methods for improving impact resistance of saturated polyester resins.

Representatives thereof are, for example, as follows: a method of adding ethylene copolymer containing an active group reactive with saturated polyester resin as well as having rubber elasticity; a method of melt mixing with an α-olefin-glycidyl methacrylate copolymer; and a method of adding a polyfunctional compound selected from the group consisting of epoxy compounds, isocyanate compounds carboxylic acid anhydrides and carboxylic acids to an olefinic copolymer comprising α-olefin and a glycidyl ester of α, β unsaturated acid. These methods are disclosed, for example, in Japanese Patent Examined Publication (Kokoku) Nos. 28223/84 and 47419/83 and Japanese Patent Unexamined Publication (Kokai) Nos.137154/80 and 159247/81.

It has been found that these conventional methods can afford molded articles which are improved in impact resistance to some extent, but they are not yet satisfactory. The articles do not have a satisfactory balance of stiffness and impact resistance, either.

That is, the somewhat improved impact resistance and flexibility are offset by mechanical properties such as stiffness, tensile strength and hardness which are considerably inferior to those of saturated polyester per se.

Therefore, it is important to accomplish a method for making a composition free from the above problems by blending an ethylene copolymer with saturated polyester resins and development thereof has been earnestly demanded.

The present invention seeks to solve the above problems, namely, to improve the impact resistance of saturated polyester resins without damaging mechanical properties such as heat resistance and stiffness, by melt-mixing an ethylene copolymer of specific structure and a crosslinking polyfunctional compound with saturated polyesters by a specific blending method. Thus, the object of the present invention is to provide a method for producing a saturated polyester resin composition mainly composed of saturated polyester resin and having excellent impact resistance as well as other mechanical properties such as heat resistance and stiffness.

As a result of the inventors' extensive and intensive research on methods for production of resin compositions which are effective for modification of saturated polyester resins, a method has been found which can afford a composition which has well balanced impact resistance, heat resistance and stiffness, and has excellent processability and appearance in molded articles.

The invention provides a method for producing a partially crosslinked thermoplastic resin composition which comprises melt-kneading (A) 60-97 parts by weight of polybutylene terephthalate and (B) 40-3 parts by weight of an epoxy group-containing ethylene copolymer containing in the main chain
(a) 30-99% by weight of units derived from ethylene,
(b) 20-1% by weight of units derived from an α,β-unsaturated carboxylic acid glycidyl ester, and
(c) 70-0% by weight of units derived from a carboxylic acid vinyl ester or an α,β-unsaturated carboxylic acid alkyl ester,
and being prepared by a high pressure radical polymerisation, and then melt-kneading 100 parts of the resulting composition with (C) 0.01-20 parts by weight of a polyfunctional compound selected from (C1) an aliphatic diaminecarbamate, (C2) an ethylene copolymer comprising units derived from ethylene and an α,β-unsaturated carboxylic acid N,N-dialkylaminoalkyl ester or from ethylene and an N,N-dialkylaminoalkyl α,β-unsaturated carboxylic acid amide, (C3) an ethylene copolymer comprising units derived from ethylene, an α,β-unsaturated carboxylic acid alkyl ester and maleic anhydride, and (C4) 2,2'-(1,3-phenylene)-bis(2-oxazoline).

Poly(l,4-butylene)terephthalate (PBT) (component (A)) is used as the saturated polyester resin in the invention.

In the epoxy group-containing ethylene copolymer (B), the unsaturated glycidyl ester (b) may be of formula (1) 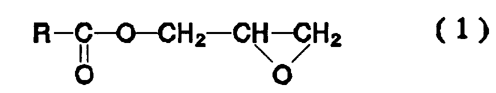 wherein R is hydrocarbon group of 2-18 carbon atoms which has an ethylenically unsaturated bond.

Typical examples are glycidyl acrylate and glycidyl methacrylate.

Preferred epoxy group-containing ethylene copolymers (B) are copolymers comprising an ethylene unit and a glycidyl methacrylate unit, copolymers comprising an ethylene unit, a glycidyl methacrylate unit and a methyl acrylate unit and copolymers comprising an ethylene unit, a glycidyl methacrylate unit and a vinyl acetate unit.

The epoxy group-containing ethylene copolymer (B) has a melt index (JIS K6760) of 0.5-100 g/10 min. When the melt index is more than 100 g/10 min, the mechanical properties of the resulting composition are not sufficient and when less than 0.5 g/10 min., the copolymer lacks compatibility with PBT.

The epoxy group-containing ethylene copolymer (B) is produced by random copolymerization where unsaturated epoxy compound is introduced into the main chain of the copolymer. A specific method for preparation includes copolymerizing unsaturated epoxy compound and ethylene at 100-300°C and under 500-4000 atm in the presence of a radical forming agent and in the presence or absence of a suitable solvent or chain transfer agent.

Component (C) may be (C1) an aliphatic diamine carbamate such as hexamethylenediamine carbamate and ethylenediamine carbamate; (C2) an ethylene copolymer comprising an ethylene unit and an α,β-unsaturated carboxylic acid N,N-dialkylaminoalkyl ester unit such as a copolymer of ethylene and N,N-dimethylaminoethyl methacrylate, or an ethylene copolymer comprising an ethylene unit and an N,N-dialkylaminoalkyl α,β-unsaturated carboxylic acid amide unit such as a copolymer or ethylene and N,N-dimethylaminopropylacrylamide; (C3) an ethylene copolymer comprising an ethylene unit, an α,β-unsaturated carboxylic acid alkyl ester unit and a maleic anhydride unit (examples of an α,β-unsaturated carboxylic acid alkyl ester unit are alkyl esters of acrylic acid and methacrylic acid such as methyl acrylate, ethyl acrylate, butyl acrylate, methyl methacrylate, ethyl methacrylate and butyl methacrylate); or (C4) 2,2'-(1,3-phenylene)-bis(2-oxazoline).

The thermoplastic resin composition produced by the invention contains 60-97 parts by weight, preferably 70-90 parts by weight of PBT (A) and 40-3 parts by weight, preferably 30-10 parts by weight of the epoxy group-containing ethylene copolymer component (B). When the amount of PBT (A) is less than 60 parts by weight, the stiffness and heat resistance of the composition are not sufficient and when more than 97 parts by weight, no preferable results are obtained for impact resistance.

The amount of the polyfunctional compound component (C) must be adjusted depending on its reactivity with epoxy groups. However, when the amount of (C) is less than 0.01 part by weight, the improvement in mechanical properties such as impact resistance is insufficient and when more than 20 parts by weight, an increment in amount has no recognizable effect.

The method of the invention comprises melt-kneading the PBT (A) and the epoxy group-containing ethylene copolymer (B) and, in a subsequent step, adding to the resulting composition the polyfunctional compound (C) and melt-kneading them to carry out the partial crosslinking reaction.

The reason why the addition and melt-kneading of the polyfunctional compound (C) results in a remarkable improvement in properties is considered to be that a micro-dispersion of polymer having good properties is produced by proper crosslinking.

In general, an improvement in impact resistance tends to cause a reduction in stiffness and a deterioration in heat distortion resistance. In contrast, in the composition obtained by the method of the present invention, impact resistance can be improved without a deterioration in other properties. This is an unexpected improvement.

The melt-kneading can be carried out by conventional kneading apparatuses such as single- of twin-screw extruders and various other extruders, Banbury mixers, rolls and various kneaders.

Addition and melt-kneading of component (C) can be performed, for example, by producing a melt-kneaded and granulated composition of PBT (A) and epoxy group-containing ethylene copolymer (B) with an extruder, then adding the polyfunctional compound (C) to the composition, and again melt-kneading the composition with an extruder. Preferably, an extruder with a side feed device is used and, in a former stage (feeding side), a melt-kneaded composition of PBT (A) and epoxy group-containing ethylene copolymer (B) is produced and, in a latter stage (extrusion side) of the same extruder, solid or molten component (C) is added to the composition by the side feed device and melt-kneaded.

Alternatively, it is also a preferable method to previously produce a masterbatch by melt-kneading component (C) and a resin which is inert to the component (C), and add this masterbatch in a suitable amount during production of the thermoplastic resin composition.

Preferably, before kneading, the resin components in powder or pellet form are homogeneously mixed by an apparatus such as a tumbler or Henschel mixer, but if necessary, the components may be separately fed in a given amount to a kneading apparatus without said previous mixing.

The resin composition of the present invention may further contain, as far as its processability and properties are not damaged, other components such as, for example, pigments, dyes, reinforcing agents, fillers, heat stabilizers, antioxidants, weathering agents, nucleating agents, lubricants, antistatic agents, fire retardants, plasticizers and other polymers.

When reinforcing agents or fillers such as surface-treated glass fiber, carbon fiber, talc and calcium carbonate are added to the resin composition produced by the invention, very useful materials of high stiffness and impact resistance can be obtained.

The kneaded resin composition produced by the invention may be molded by various methods such as injection molding and extrusion molding.

The present invention will be further illustrated by the following examples.

In the examples, modulus in bending (thickness of sample: 3.2 mm; measuring temperature: 23°C), Izod impact strength (thickness of sample: 3.2 mm; temperature: 23°C and -40°C; with V-notch), heat distortion temperature (thickness of sample: 3.2 mm; bending stress: 4.6 kgf/cm) and melt index (190°C, 2160 g) were measured in accordance with JIS K7203, JIS K7110, JIS K7207 and JIS K6760, respectively.

In the examples and com arative examples, the following were used as the PBT (A), the epoxy group-containing ethylene copolymer (B) and the polyfunctional compound (C).
- (A): PBT: TUFPET PBT® N1000 (Mitsubishi Rayon Co., Ltd.)
- (B): Epoxy group-containing ethylene copolymer: Copolymers prepared by high-pressure radical copolymerization were used.
(1) Copolymer (1)
E/GMA=94/6% by weight, MI=3 g/10 min.
(2) Copolymer (2)
E/GMA/MA=83/12/5% by weight, MI=3 g/10 min.
(3) Copolymer (3)
E/GMA/MA=47/8/45% by weight, MI=17 g/10 min.
- (C): Polyfunctional compounds
(1) Compound (1)
E/EA/MAH=66.8/32.0/1.2% by weight, MI=7 g/10 min. (Ethylene copolymer prepared by the methods disclosed in French Patent No.1,323,379 and French Patent Application No.81/01,430)
(2) Compound (2)
An ethylene copolymer of E/DAM=72/28% by weight and MI=100 g/10 min. prepared by high-pressure radical copolymerization.
(3) MB-1
A masterbatch prepared by melt-kneading 2 parts by weight of hexamethylenediamine carbamate and 98 parts by weight of ACRYFT®CM4008 (Sumitomo Chemical Co., Ltd.) at 200 °C by a 30 mmø single-screw extruder with a vent. (ACRYET® CM4008 is an ethylene copolymer of E/MMA=81/19% by weight and MI=7 g/10 min. prepared by high-pressure radical copolymerization)
(4) MB-2
A masterbatch prepared by melt-kneading 5 parts by weight of 2,2'-(1,3-phenylene)-bis(2-oxazoline) and 95 parts by weight of ACRYFT® CM4008 (Sumitomo Chemical Co., Ltd.) at 200 °C by a 30 mmø single-screw extruder with a vent.
(5) Compound (3)
An ethylene copolymer of E/DAM=85/15% by weight and MI=15 g/10 min. prepared by high-pressure radical copolymerization.

In the above, the abbreviations stand for the following:
E: Ethylene; GMA: Glycidyl methacrylate; MA: Methyl acrylate; EA: Ethyl acrylate; MAH: Maleic anhydride; DAM: dimethylaminoethyl methacrylate; MMA: Methyl methacrylate; and MI: Melt index.

### Examples 1-5

PBT and epoxy group-containing ethylene copolymer as shown in Table 1 were melt-kneaded at 230°C by a 30 mmø single-screw extruder with a vent to obtain resin compositions.

To these compositions were added the polyfunctional compounds shown in Table 1 and each of the mixtures was melt-kneaded at 230°C by the same 30 mmø single-screw extruder with a vent to obtain resin compositions.

Each of the resin compositions was dried at 120°C for 3 hours and therefrom a test piece for measurement of properties was prepared by a 280 g (10 oz) injection molding machine (TOSHIBA IS-150 E-V) at 250°C and at a mold temperature of 80°C.

The bending modulus, Izod impact strength and heat distortion temperature of the test pieces are shown in Table 1.

### Comparative Example 1

PBT, epoxy group-containing ethylene copolymer and polyfunctional compound as shown in Table 1 were melt-kneaded in one stage at 230°C by a 30 mmø single-screw extruder with a vent to obtain resin compositions. The resin composition was evaluated in the same manner as in Example 1 and the results are shown in Table 1. It was inferior in Izod impact strength.

### Comparative Examples 2 and 5

PBT and epoxy group-containing ethylene copolymer as shown in Table 1 were melt kneaded at 230 °C by a 30 mmø single-screw extruder with a vent to obtain resin compositions.

These resin compositions were evaluated in the same manner as in Example 1 and the results are shown in Table 1. The compositions showed less improvement in Izod impact strength as compared with those of Examples 1, 3 and 7. They were also inferior in heat distortion resistance (heat distortion temperature) to those of Examples 1 and 3.

### Comparative Examples 3 and 4

PBT and polyfunctional compound as shown in Table 1 were melt-kneaded at 230 °C by a 30 mmø single-screw extruder with a vent to obtain resin compositions. These compositions were evaluated in the same manner as in Example 1 and the results are shown in Table 1. They were inferior in Izod impact strength.

### Comparative Example 6

PBT and epoxy group-containing ethylene copolymer as shown in Table 1 were melt-kneaded at 230 °C by a 30 mmø single-screw extruder with a vent to obtain a resin composition. To this resin composition was added ACRYFT® CM4008 and the mixture was melt-kneaded at 230 °C by the same 30 mmø extruder with a vent to obtain a resin composition. This composition was evaluated in the same manner as Example 1 and the results are shown in Table 1. The composition was inferior in Izod impact resistance.

### Examples 6 and 7

PBT and epoxy group-containing ethylene copolymer as shown in Table 1 were melt-kneaded at 230 °C by a 44 mmø twin-screw extruder having a side feed and a vent during which polyfunctional compound as shown in Table 1 was added in a constant amount from the side feed provided halfway along the barrel of the extruder and melt-kneaded to obtain resin compositions. These resin compositions were evaluated in the same manner as Example 1 and the results are shown in Table 1.

### Comparative Example 7

The properties of the PBT-based resin used in the above examples were evaluated and the results are shown in Table 1.

As explained above, the thermoplastic resin composition obtained by the method of the invention provides a very good balance of properties for molded articles such as mechanical properties and thermal properties, and also provides molded articles of good appearance.

Especially, addition of the polyfunctional compound can improve impact resistance and heat distortion resistance without damaging other properties. This is an unexpected effect.

The novel resin composition provided by the invention can be easily processed into molded articles, films and sheets by processing methods ordinarily used for saturated polyester thermoplastic resin compositions such as injection molding and extrusion molding. The thus obtained articles have an extremely good balance of properties such as impact resistance, stiffness and heat resistance, and have a superior appearance and surface smoothness.

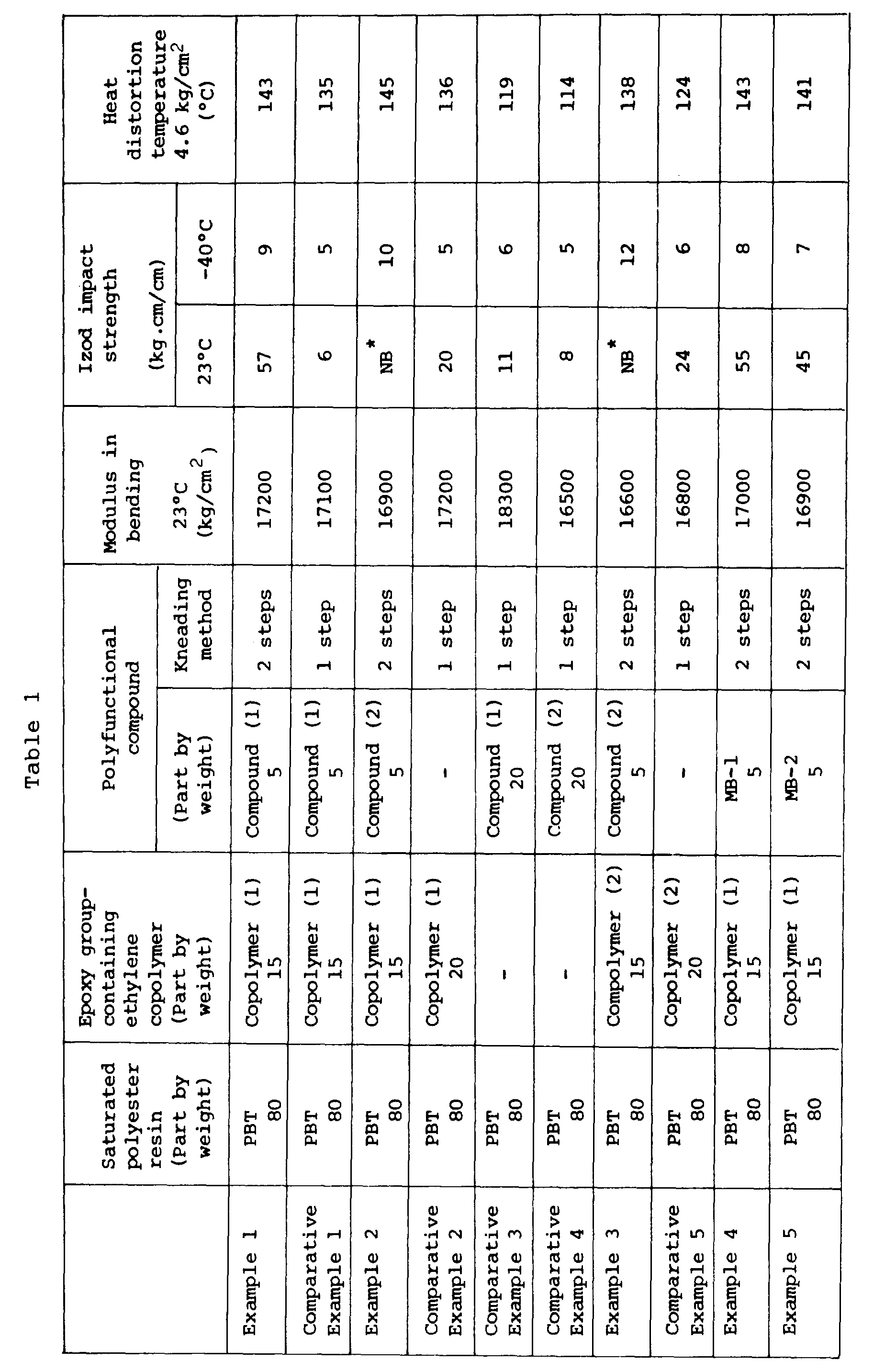

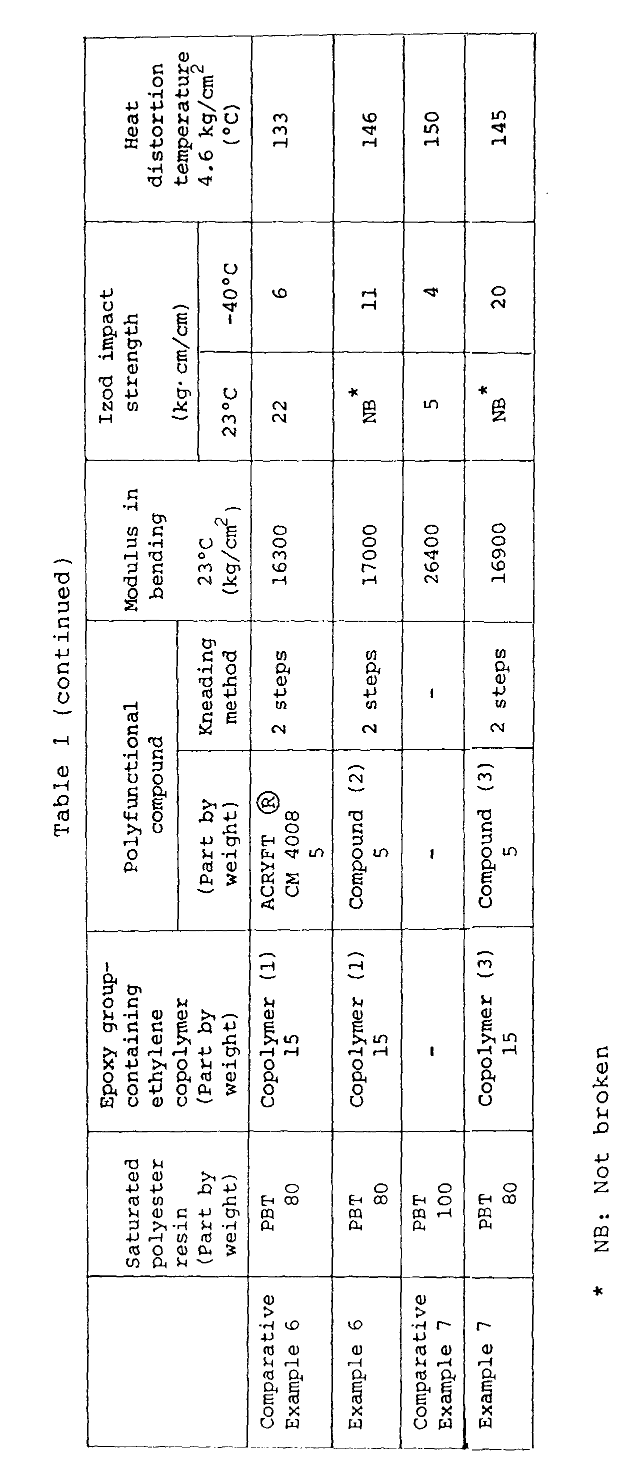

## Claims

1. A method for producing a partially crosslinked thermoplastic resin composition which comprises melt-kneading (A) 60-97 parts by weight of polybutylene terephthalate and (B) 40-3 parts by weight of an epoxy group-containing ethylene copolymer obtainable by high pressure radical polymerisation and containing in the main chain
(a) 30-99% by weight of units derived from ethylene,
(b) 20-1% by weight of units derived from an α, β-unsaturated carboxylic acid glycidyl ester, and
(c) 70-0% by weight of units derived from a carboxylic acid vinyl ester or an α,β-unsaturated carboxylic acid alkyl ester,
and then melt-kneading 100 parts of the resulting composition with (C) 0.01-20 parts by weight of a polyfunctional compound selected from (C1) an aliphatic diaminecarbamate, (C2) an ethylene copolymer comprising units derived from ethylene and an α,β-unsaturated carboxylic acid N,N-dialkylaminoalkyl ester or from ethylene and an N,N-dialkylaminoalkyl α,β-unsaturated carboxylic acid amide, (C3) an ethylene copolymer comprising units derived from ethylene, an α,β-unsaturated carboxylic acid alkyl ester and maleic anhydride, and (C4) 2,2'-(1,3-phenylene)-bis(2-oxazoline).

2. A method according to claim 1 wherein the resulting par tially crosslinked composition is molded.

## Patentansprüche

1. Verfahren zur Herstellung einer teilweise vernetzten thermoplastischen Harz-Zusammensetzung, welches umfaßt das Schmelzkneten von (A) 60 - 97 Gewichtsteilen Polybutylenterephthalat und (B) 40 - 3 Gewichtsteilen eines Epoxygruppe-haltigen Ethylen-Copolymeren, erhältlich durch radikalische Hochdruck-Polymerisation und in der Hauptkette enthaltend
(a) 30 - 99 Gewichts-% von Ethylen abgeleitete Einheiten,
(b) 20 - 1 Gewichts-% von einem α,β-ungesättigten Carbonsäureglycidylester abgeleitete Einheiten und
(c) 70 - 0 Gewichts-% von einem Carbonsäurevinylester oder einem α,β-ungesättigten Carbonsäurealkylester abgeleitete Einheiten,
und das anschließende Schmelzkneten von 100 Teilen der resultierenden Zusammensetzung mit (C) 0,01 - 20 Gewichtsteilen einer polyfunktionellen Verbindung, die ausgewählt ist aus (C1) einem aliphatischen Diamincarbamat, (C2) einem Ethylen-Copolymer, das von Ethylen und einem α,β-ungesättigten Carbonsäure-N,N-dialkylaminoalkylester oder von Ethylen und einem N,N-Dialkylaminoalkyl-α,β-ungesättigten Carbonsäureamid abgeleitete Einheiten umfaßt, (C3) einem Ethylen-Copolymer, das von Ethylen, einem α,β-ungesättigten Carbonsäurealkylester und Maleinsäureanhydrid abgeleitete Einheiten umfaßt, und (C4) 2,2'-(1,3-Phenylen)-bis(2-oxazolin).

2. Verfahren nach Anspruch 1, in welchem die resultierende teilweise vernetzte Zusammensetzung geformt wird.

## Revendications

1. Procédé de préparation d'une composition de résine thermoplastique réticulée, qui consiste à malaxer à l'état fondu (A) de 60 à 97 parties en poids de poly(téréphtalate) de butylène et (B) de 40 à 3 parties en poids d'un copolymère de l'éthylène contenant des groupes époxy pouvant être obtenu par polymérisation radicalaire sous haute pression et contenant dans la chaine principale:
a) de 30 à 99 en poids de motifs dérivant de l'éthylène,
b) de 20 à 1% de motifs dérivant d'un ester glycidylique d'un acide carboxylique *α,* β insaturé, et
c) de 70 à 0% en poids de motifs dérivant d'un ester vinylique d'acide carboxylique ou d'un ester alkylique d'acide carboxylique *α,* β insaturé
puis à malaxer à l'état fondu 100 parties de la composition obtenue avec (C) de 0,01 à 20 parties en poids d'un composé polyfonctionnel choisi parmi (C1) un carbamate de diamine aliphatique, (C2) un copolymère de l'éthylène comprenant de motifs dérivant de l'éthylène et d'un ester N,N-dialkylamino-alkylique d'un acide carboxylique α, β insaturé ou de l'éthylène et d'un amide d'acide N,N-dialkyaminoalkylcarboxylique α, β insaturé, (C3) un copolymère de l'éthylène comprenant des motifs dérivant de l'éthylène, un ester alkylique d'acide carboxylique *α,* β insaturé et de l'anhydrique maléique, et (C4) de la 2,2-(1,3-phénylène)-bis(2-oxazoline).

2. Procédé selon la revendication 1, dans lequel on moule la composition partiellement réticulée obtenue.
